# EUROPÄISCHE PATENTSCHRIFT

(11) **EP 2 248 623 B1**
(45) Veröffentlichungstag und Bekanntmachung des Hinweises auf die Patenterteilung: **24.07.2019**
(21) Anmeldenummer: 10003816.5
(22) Anmeldetag: 09.04.2010
(51) Int. Cl.: B23K 11/00, B23K 33/00

(54) **Karosseriestruktur mit einer pressgehärteten B-Säule**
Car body strusture with a pressure-hardened B-pillar
Structure de carrosserie dotée d'un pied-milieu durci à la presse

(30) Priorität: 08.05.2009 DE 102009020423
(43) Veröffentlichungstag der Anmeldung: 10.11.2010
(73) Patentinhaber: Bayerische Motoren Werke Aktiengesellschaft, 80809 München (DE)
(72) Erfinder: Pfestorf, Markus, Dr., 85375 Neufahrn (DE); Dragoi, Christian, 81477 München (DE); Brandhuber, Martin, 81549 München (DE)

(56) Entgegenhaltungen:
- EP-A1- 1 180 470
- DE-A1- 10 323 746
- DE-A1-102005 055 374
- DE-B3-102005 032 113

## Beschreibung

Die Erfindung betrifft ein Verfahren zur Herstellung eines Teileverbunds mit wenigstens einem pressgehärteten Blechbauteil für ein Kraftfahrzeug. Die Erfindung betrifft ferner ein Kraftfahrzeug umfassend einen solchen Teileverbund, sowie eine Karosseriestruktur für ein Kraftfahrzeug.

Pressgehärtete Blechbauteile, sowie Verfahren und Vorrichtung zu deren Herstellung, sind aus dem Stand der Technik bekannt. Hierzu wird stellvertretend auf die DE 10 2007 040 013 A1 und DE 10 2007 040 028 A1 derselben Anmelderin verwiesen. Beim Presshärten wird die Festigkeit und/oder Härte eines Blechmaterials durch eine Wärmebehandlung und abschließende Abkühlung in einem Umformwerkzeug heraufgesetzt. Die Festigkeitserhöhung und/oder Härteerhöhung (Härtung) des Blechmaterials basiert im Wesentlichen auf einer Gefügeumwandlung. Pressgehärtete Blechbauteile weisen neben ihren hohen Festigkeiten und/oder Härten auch ein hohes Energieaufnahmevermögen bis zum Versagen (Bruch) auf, weshalb solche pressgehärteten Blechbauteile bevorzugt auch im Kraftfahrzeugbau zum Einsatz kommen. Eine Karosseriestruktur für einen Personenkraftwagen, umfassend eine pressgehärtete B-Säule, ist aus der DE 103 23 746 bekannt.

Im Kraftfahrzeugbau erfolgt das Fügen pressgehärteter Blechbauteile mit anderen Bauteilen oder deren Einbindung in eine übergeordnete Struktur, wie z.B. in eine Karosseriestruktur, zumeist mittels von Schweißverbindungen. In der Praxis besteht jedoch das Problem, dass sich bei einer starken mechanischen Belastung eines pressgehärteten Blechbauteils und insbesondere bei einer hochdynamischen Beanspruchung während eines Unfalls (Crash), ausgehend von einer solchen Schweißverbindung Risse im pressgehärteten Blechbauteil ausbilden, die zum vorzeitigen Versagen dieses Blechbauteils führen.

Es ist daher die Aufgabe der vorliegenden Erfindung, Möglichkeiten zur Vermeidung einer solchen Rissausbildung aufzuzeigen.

Diese Aufgabe wird gelöst von einer Karosseriestruktur mit den Merkmalen des Anspruchs 1. Die abhängigen Ansprüche betreffen vorteilhafte und bevorzugte Weiterbildungen.

Bei einem Bereich mit einer geringeren Festigkeit und/oder Härte handelt es sich um einen räumlich und/oder flächenmäßig im Wesentlichen exakt definierten Bereich bzw. Abschnitt des pressgehärteten Blechbauteils, was durch die Bezeichnung "lokal" angezeigt ist. Bevorzugt umgibt dieser Bereich die Schweißverbindung.

Die "anderen Bereiche" des pressgehärteten Blechbauteils sind die übrigen Bereiche, die infolge der Presshärtung durch eine hohe Festigkeit und/oder Härte gekennzeichnet sind. Bevorzugt ist vorgesehen, dass die anderen Bereiche des pressgehärteten Blechbauteils im Wesentlichen eine einheitliche Festigkeit und/oder Härte aufweisen. Ein gängiges Blechmaterial weist z.B. vor dem Presshärten eine Festigkeit (Zugfestigkeit) von ca. 400 MPa und nach dem Presshärten eine Festigkeit von ca. 1200 bis 1600 MPa auf.

Das "zweite Bauteil" muss im Hinblick auf die Schweißbarkeit ein Metallbauteil sein. Bevorzugt ist vorgesehen, dass es sich hierbei um ein Blechbauteil handelt. Dies kann auch ein pressgehärtetes Blechbauteil sein, dass dann bevorzugt ebenfalls Bereiche mit einer geringeren Festigkeit und/oder Härte aufweist.

Unter "Festigkeit" wird eine Werkstoffeigenschaft des Blechmaterials verstanden, welche den mechanischen Widerstand beschreibt, den der Werkstoff des Blechmaterials einer plastischen Verformung oder auch einer Trennung entgegenbringt. Unter "Härte" wird eine Werkstoffeigenschaft verstanden, welche den mechanischen Widerstand beschreibt, den der Werkstoff des Blechmaterials einer äußeren mechanischen Einwirkung entgegensetzt. Festigkeit und Härte können nach gängigen Werkstoffmodellen korrelieren.

Unter einer "mechanisches Belastung" wird ein eindimensionaler oder mehrdimensionaler Lastzustand verstanden, dem das pressgehärtete Blechbauteil insbesondere im Bereich einer Schweißverbindung ausgesetzt ist. Eine hochdynamische Beanspruchung bezeichnet schlagartig auftretende oder sich schnell ändernde Lastzustände, insbesondere mit hohen Beträgen.

Die Erfindung basiert auf der Erkenntnis, dass die Ursache für die Rissausbildung im Bereich einer Schweißverbindung die Wärmeeinbringung während des Schweißvorgangs ist. Aufgrund dieser Wärmeeinbringung erfolgt in einer Wärmeeinflusszone um die Schweißverbindung herum eine zumindest teilweise Umwandlung und/oder Rückumwandlung des infolge der Presshärtung harten Gefüges in ein Gefüge mit einer geringeren Festigkeit und/oder Härte, was als "weicher Bereich" bezeichnet werden kann. In größerer Entfernung zur Schweißverbindung bleibt hingegen das harte Gefüge des Blechbauteils, wie dies durch die Presshärtung erhalten wird, unbeeinflusst. Bei einem Schweißpunkt ist dieser weiche Bereich z.B. kreisringförmig um den Schweißpunkt herum ausgebildet, mit einer Ringbreite von in etwa 0,5 bis 1,0 mm. Demgegenüber weist der zentral in diesem weichen Bereich befindliche Schweißpunkt wiederum eine hohe Festigkeit und/oder Härte auf, die häufig noch oberhalb derer des pressgehärteten Blechmaterials liegt. Ähnliches gilt sinngemäß für eine Schweißnaht.

Somit sind in einem relativ kleinen Flächenbereich (bezüglich der Draufsicht) hohe Festigkeits- und/oder Härtedifferenzen gegeben. Insbesondere an den Übergängen zum weichen Bereich besteht ein deutlicher Festigkeits- bzw. Härteabfall, der bei mechanischer Belastung eine Kerbwirkung hervorruft. Aufgrund dieser Kerbwirkung kommt es insbesondere bei hochdynamischer Beanspruchung des pressgehärteten Blechbauteils im Bereich der Schweißverbindung zu Spannungsspitzen im Blechmaterial, die lokal höhe plastische Dehnungen des Blechmaterials hervorrufen und somit eine Rissinitiierung bewirken können. Ein initiierter Riss kann sich dann in angrenzende Blechbauteilbereiche mit festem bzw. hartem Gefüge ausbreiten, was schließlich zum Bruch des pressgehärteten Blechbauteils führt. Die unerwünschte Rissausbildung erfolgt demnach durch den Mechanismus einer Rissinitiierung im Bereich der Schweißverbindung und einer sich hieran anschließenden Rissausbreitung, was erfindungsgemäß verhindert wird.

Unter einer Karosseriestruktur wird der tragende Aufbau der Fahrzeugkarosserie eines Kraftfahrzeugs verstanden, der in der Regel aus miteinander gefügten Blechbauteilen gebildet ist. Hieran werden die Karosserieanhängteile befestigt, wozu z.B. die Fahrzeugtüren, der Heckdeckel und die Frontklappe zählen. Die Fahrzeugkarosserie ist demnach die Gesamtheit aus Karosseriestruktur und Karosserieanhängteilen. Unter einem Fahrwerk wird die Gesamtheit jener Teile verstanden, die der Verbindung der Fahrzeugkarosserie zur Fahrbahn dienen. Hierzu zählen insbesondere Lenkungsteile und Radaufhängungsteile.

Gemäß der Erfindung weist die Karosseriestruktur eine Pressgehärtete B-Säule auf.

Gemäß einer bevorzugten Weiterbildung ist vorgesehen, dass die pressgehärtete B-Säule aus einem 22MnB5-Stahl gebildet ist. Alternativ kann die pressgehärtete B-Säule auch aus einem 16MnB5-Stahl gebildet sein. Das zweite Bauteil des Teileverbunds kann ebenfalls aus diesem Stahlwerkstoff gebildet sein.

Gemäß einer bevorzugten Weiterbildung ist vorgesehen, dass die Schweißverbindung ein Schweißpunkt ist. Dies schließt das Vorhandensein von Schweißnähten nicht aus.

Gemäß einer bevorzugten Weiterbildung ist vorgesehen, dass der Bereich mit der geringeren Festigkeit und/oder Härte einem Flächenbereich entspricht, der wenigstens dem 15-fachen, bevorzugt wenigstens dem 10-fachen und insbesondere wenigstens dem 5-fachen der Schweißpunktfläche entspricht, wobei der Schweißpunkt bevorzugt im Wesentlichen im Flächenschwerpunkt, insbesondere im geometrischer Flächenschwerpunkt, dieses Flächenbereichs angeordnet ist. Dieser Flächenbereich ist aus der Draufsicht in Richtung des Schweißpunkts bestimmt. Hat ein Schweißpunkt in der Draufsicht z.B. einen Durchmesser von 5 mm, was einer Schweißpunktfläche von ca. 20 mm² entspricht, so hat der diesen Schweißpunkt umgebende Flächenbereich mit der geringeren Festigkeit und/oder Härte eine Flächengröße von wenigstens 300 mm², bevorzugt von wenigstens 200 mm² und insbesondere von wenigstens 100 mm². Gängige Schweißpunktdurchmesser im Kraftfahrzeugbau und insbesondere im Karosseriebau sind 3 bis 8 mm.

Gemäß einer bevorzugten Weiterbildung ist vorgesehen, dass die Schweißverbindung eine Schweißnaht ist. Dies schließt das Vorhandensein eines oder mehrerer Schweißpunkte nicht aus.

Gemäß einer bevorzugten Weiterbildung ist vorgesehen, dass der Bereich mit der geringeren Festigkeit und/oder Härte einem Flächenbereich entspricht, der sich längs zum Schweißnahtverlauf erstreckt, wobei die Breite dieses Bereichs wenigstens dem 10-fachen, bevorzugt wenigstens dem 5-fachen und insbesondere wenigstens dem 2,5-fachen der Schweißnahtbreite entspricht und wobei die Schweißnaht im wesentlichen mittig dieses Flächenbereichs verläuft. Dieser Flächenbereich ist aus der Draufsicht in Richtung der Schweißnaht bestimmt. Hat eine Schweißnaht z.B. eine Breite von 2 mm, so beträgt die quer zum Schweißnahtverlauf bemessene Breite des diese Schweißnaht umgebenden Flächenbereichs mit der geringeren Festigkeit und/oder Härte 20 mm, bevorzugt 10 mm und insbesondere 5 mm. Gängige Schweißnahbreiten im Kraftfahrzeugbau und insbesondere im Karosseriebau sind 0,7 bis 3 mm. Gängige Schweißnahtlängen liegen im Bereich von 20 bis 30 mm. Der Bereich mit der geringeren Festigkeit und/oder Härte umgibt auch die Endpunkte der Schweißnaht.

Nachfolgend wird die Erfindung beispielhaft anhand der Figuren näher erläutert. Es zeigen:
- Fig. 1: das Verfahren zum Herstellen eines Teileverbunds in einer schematischen Übersicht;
- Fig. 2: eine Punktschweißverbindung nach dem Stand der Technik zwischen einem pressgehärteten Blechbauteil und einem zweiten Bauteil, in einer schematischen Draufsicht und in einer Schnittansicht;
- Fig. 3: eine Punktschweißverbindung zwischen einem pressgehärteten Blechbauteil und einem zweiten Bauteil, in einer schematischen Schnittansicht, entsprechend zur Fig. 2;
- Fig. 4: eine pressgehärtete B-Säule einer Kraftfahrzeugkarosserie, deren Fügeflansch abschnittsweise eine geringere Festigkeit und/oder Härte aufweist, in einer perspektivischen Ansicht;
- Fig. 5: einen Ausschnitt aus einem Presshärtwerkzeug zum Herstellen der B-Säule aus Fig. 4, in einer schematischen Schnittansicht; und
- Fig. 6: eine alternative Ausführungsform des Presshärtewerkzeugs aus Fig. 5.

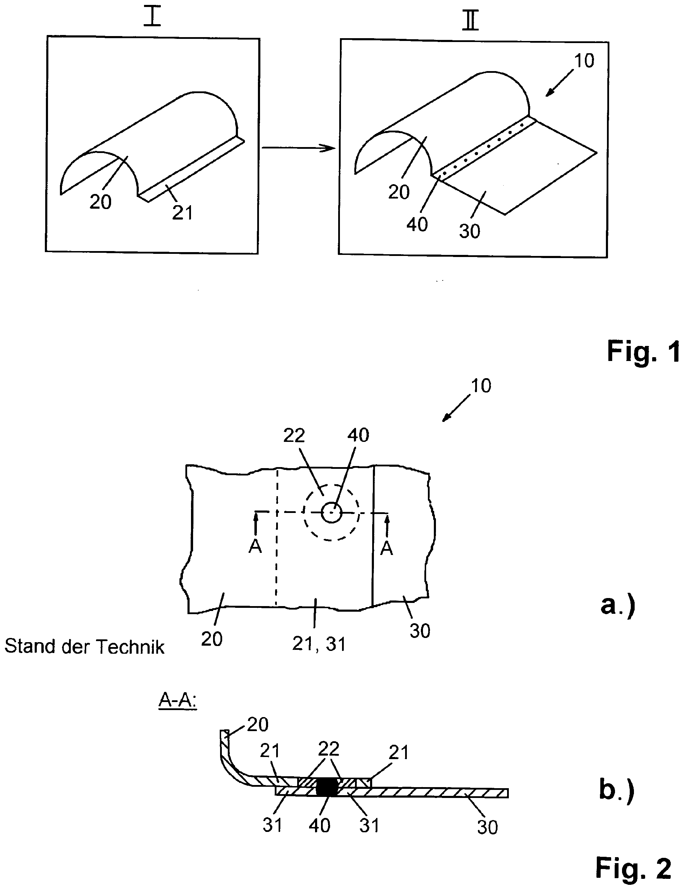

Fig. 1 zeigt ein Verfahren zur Herstellung eines Teileverbunds 10 in einer schematischen Übersicht. Im Schritt I wird ein pressgehärtetes Blechbauteil 20 hergestellt, das einen Fügeflansch 21 aufweist. Im Schritt II wird dieses pressgehärtete Blechbauteil 20 entlang seines Fügeflansches 21 mit einem zweiten Bauteil 30 zur Bildung des Teileverbunds 10 verschweißt, wobei die Verschweißung mittels einer Vielzahl von Schweißpunkten 40 erfolgt. Das pressgehärtete Blechbauteil 20 und das zweite Bauteil 30 sind jeweils aus einem Blechmaterial gebildet.

Fig. 2a zeigt in einer Draufsicht einen Schweißpunkt 40, der das pressgehärtete Blechbauteil 20 entlang seines Fügeflansches 21 mit dem zweiten Bauteil 30 verbindet bzw. fügt, wozu das zweite Bauteil 30 ebenfalls einen Fügeflansch 31 umfasst. Gemäß dem Stand der Technik weist das pressgehärtete Blechbauteil 20 in allen Bereichen, d.h. auch im Fügeflansch 21, eine im Wesentlichen konstante Festigkeit und/oder Härte auf, wie sich diese während des Presshärtevorgangs im Schritt I einstellt.

Während des Schweißvorgangs im Schritt II bildet sich infolge der Wärmeeinbringung am Fügeflansch 21 des pressgehärteten Blechbauteils 20 um den Schweißpunkt 40 herum ein kreisringförmiger Bereich 22 aus, innerhalb dem die Festigkeit und/oder Härte des Blechmaterials unterhalb derer in anderen Bereichen des pressgehärteten Blechbauteils 20 liegt. Die Wärmeeinbringung beim Schweißvorgang bewirkt innerhalb dieses Bereichs 22 zumindest teilweise eine Umwandlung und/oder Rückumwandlung des beim Presshärtevorgang gehärteten Gefüges hin zu einem Gefüge mit weniger festen und/oder weniger harten Eigenschaften. Dieser Bereich 22 kann somit auch als weicher Bereich bezeichnet werden. Hiervon betroffen ist lediglich das pressgehärtete Blechbauteil 20, sofern das Blechmaterial des zweiten Bauteils 30 seinerseits nicht auf die Wärmeeinbringung während des Schweißvorgangs reagiert. Den kreisringförmigen, weichen Bereich 22 zeigt auch die Schnittansicht der Fig. 2b.

Der kreisringförmige, weiche Bereich 22 ruft bei mechanischer Belastung des Blechbauteils 20 im Bereich des Schweißpunkts 40 eine Kerbwirkung hervor, aufgrund derer im Blechmaterial Spannungsspitzen auftreten, die zu einer Rissinitiierung in diesem Bereich 22 und insbesondere an dessen Randstellen führen können. Ausgehend von dieser Rissinitiierung kann es zu einer Rissausbreitung auch in die an den weichen Bereich 22 angrenzenden harten Bereiche des Blechbauteils 20 kommen, was schließlich zum Versagen des Blechbauteils 20 durch Bruch führen kann. Dies ist unerwünscht und insbesondere auch im Hinblick auf einen sicherheitsrelevanten Einsatz solcher pressgehärteter Blechbauteile äußerst kritisch.

Es wird daher vorgeschlagen, dass im Schritt I beim Herstellen des pressgehärteten Blechbauteils 20 im Bereich des Schweißpunktes 40, d.h. im Bereich des Fügeflansches 21, lokal eine geringere Festigkeit und/oder Härte ausgebildet wird oder dass beim Presshärten eine Gefügeumwandlung in diesem Bereich verhindert wird.

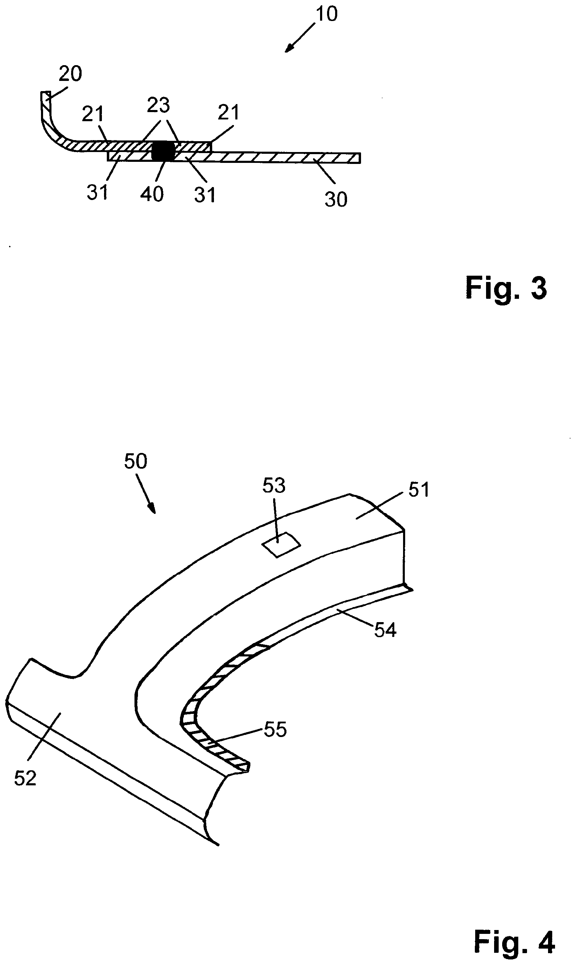

Dies zeigt Fig. 3. Der Fügeflansch 21 des pressgehärteten Blechbauteils 20 ist hier im Gesamten, d.h. über seine gesamte Breite (gemäß Darstellung) mit einer geringeren Festigkeit und/oder Härte ausgebildet, was durch die Schraffur 23 dargestellt ist. Die Festigkeit und/oder Härte entspricht z.B. der Festigkeit und/oder Härte des Blechmaterials vor dem Presshärten oder kann auch darüber liegen. Dies hat zum einen zur Folge, dass die Wärmeeinbringung beim Schweißvorgang keine Rückumwandlung des Gefüges im Bereich Schweißpunkts 40 bewirken kann und dass zum anderen bei mechanischer Belastung eine Kerbwirkung im Bereich des Schweißpunkts 40 ausbleibt oder zumindest deutlich verringert wird.

Obwohl der Fügeflansch 21 eine im Gesamten geringere Festigkeit und/oder Härte gegenüber den anderen, pressgehärteten Bereichen aufweist, steigt insbesondere bei einer hochdynamischen Beanspruchung im Bereich des Schweißpunkts 40 die Belastbarkeit des pressgehärteten Blechbauteils 20 an, da eine Rissinitiierung ausbleibt, wodurch die aufgebrachte mechanische Energie (bis zu einem bestimmten Höchstmaß) vollständig in eine Formänderungsarbeit am Blechbauteil 20 umgesetzt werden kann, ohne dass es hierbei zum Versagen des Blechbauteils 20 durch Bruch kommt.

Fig. 4 zeigt den Fußbereich einer pressgehärteten B-Säule 50 (genau genommen handelt es sich um ein Innenverstärkungsteil für eine B-Säule), die in eine Karosseriestruktur für ein Kraftfahrzeug eingebunden wird. Die B-Säule 50 umfasst einen Längsprofilabschnitt 51 der im unteren Bereich in einen Querprofilabschnitt 52 übergeht. Das Bezugszeichen 53 bezeichnet eine untere Türscharnieranbindung. Mit 54 ist ein Fügeflansch bzw. Befestigungsflansch bezeichnet, mittels dem die B-Säule 50 in die Karosseriestruktur eingebunden werden kann, wozu entlang dieses Fügeflansches 54 wenigstens eine Schweißverbindung angeordnet wird, im Form mehrerer Schweißpunkte und/oder wenigstens einer Schweißnaht.

Das Bezugszeichen 55 bezeichnet einen Abschnitt des Fügeflansches 54, der sich in etwa von der unteren Türscharnieranbindung 53 bis zum Auslauf der Bauteilkrümmung am Übergang zwischen Längsprofilabschnitt 51 und Querprofilabschnitt 52 erstreckt. Es hat sich gezeigt, dass bei einer mechanischen Belastung der B-Säule 50, insbesondere bei einer hochdynamischen Beanspruchung wie z.B. bei einem Seitenaufprall, eine Schweißverbindung in diesem Abschnitt 55 besonders kritisch hinsichtlich einer Rissinitiierung ist. Dies ist z.B. darauf zurückzuführen, dass eine mit einem Seitenaufprall einhergehenden Einbiegung des Längsprofilabschnitts 51 eine starke Zugbelastung in diesem Abschnitt 55 des Fügeflansches 54 zur Folge hat. Erfindungsgemäß ist daher vorgesehen, dass dieser kritische Abschnitt 55 des Fügeflansches 54 bereits aus dem Presshärtevorgang kommend mit einer geringeren Festigkeit und/oder Härte ausgebildet ist, als die anderen Bereiche der pressgehärteten B-Säule 50. Nachfolgend werden bevorzugte Möglichkeiten zur Herstellung einer solchen B-Säule aufgezeigt.

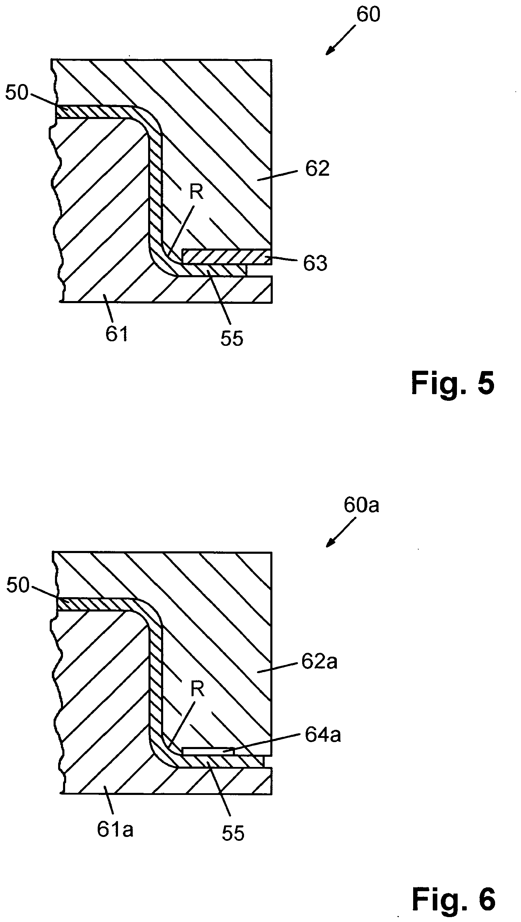

Fig. 5 zeigt ein Presshärtewerkzeug 60 zur Herstellung der B-Säule 50 aus der Fig. 4 in einem Teilschnitt, der den kritischen Abschnitt 55 des Fügeflansches 54 umfasst. Das Presshärtewerkzeug 60 ist aus einem Unterwerkzeug 61 und einem Oberwerkzeug 62 gebildet. Alternativ kann das Presshärtewerkzeug 60 auch mehrteilig aufgebaut sein. Nicht dargestellt sind etwaige Kühleinrichtungen innerhalb des Presswerkzeugs 60, wozu stellvertretend auf den eingangs benannten Stand der Technik verwiesen wird.

Um im kritischen Abschnitt 55 des Fügeflansches 54 der B-Säule 50 während des Presshärtevorgangs eine Festigkeitserhöhung und/oder Härteerhöhung auf das Niveau anderer Bauteilbereiche zu verhindern, ist im Oberwerkzeug 62 ein Einsatz 63 angeordnet. Der Einsatz 63 erstreckt sich entlang des in Fig. 4 schraffiert dargestellten kritischen Abschnitts 55 des Fügeflansches 54, was aus der Fig. 5 nicht ersichtlich ist. Dieser Einsatz 63 kann z.B. aus einem Material gebildet sein, welches gegenüber dem Werkzeugmaterial eine andere Wärmekapazität und/oder Wärmeleitung aufweist, wie z.B. ein Keramikmaterial, wodurch eine langsamere Abkühlung des kritischen Abschnitts 55 des Fügeflansches 54 gegenüber den anderen Bereichen der B-Säule 50 erreicht und z.B. eine Gefügeumwandlung verhindert wird. Der Einsatz 63 ist hier derart angeordnet, dass an der B-Säule 50 der Übergangsradius R zum kritischen Abschnitt 55 des Fügeflansches 54 noch in die Presshärtung einbezogen ist. Alternativ und/oder ergänzend kann der Einsatz 63 auch im Unterwerkzeug 61 angeordnet sein. Der Einsatz 63 muss nicht, wie gezeigt, bis zum Außenrand des Presshärtewerkzeugs 60 reichen.

Alternativ kann der Einsatz 63 auch ein aktiv heizbares Heizelement sein, mittels dessen die Abkühlung im kritischen Abschnitt 55 des Fügeflansches 54 unmittelbar beeinflusst werden kann. Hierzu kann dieses Heizelement mit einer Steuereinheit gekoppelt sein. Anstelle eines solchen Heizelements kann eine Heizeinrichtung auch direkt in das Oberwerkzeug 62 und/oder Unterwerkzeug 61 eingebaut werden.

Fig. 6 zeigt eine alternative Ausführungsform eines Presshärtewerkzeugs 60a zur Herstellung der B-Säule 50 aus der Fig. 4. Der Aufbau des Presshärtewerkzeugs 60a entspricht im Wesentlichen dem Aufbau des Presshärtewerkzeugs 60 aus der Fig. 5. Anstelle des Einsatzes 63 ist hier jedoch eine Aussparung bzw. ein Luftspalt 64a im Oberwerkzeug 62a vorgesehen, der beim Presshärtevorgang eine langsamere Abkühlung des kritischen Abschnitts 55 des Fügeflansches 54 bewirkt, bezüglich den anderen am Unterwerkzeug 61a und am Oberwerkzeug 62a anliegenden Bereichen der B-Säule 50. Um einen übermäßigen Verzug und/oder eine übermäßige Schwindung des kritischen Abschnitts 55 des Fügeflansches 54 zu verhindern, wird dieser beim Presshärten am Außenrand fest zwischen dem Unterwerkzeug 61a und dem Oberwerkzeug 62a eingeklemmt. Der Luftspalt 64a kann alternativ und/oder ergänzend auch im Unterwerkzeug 61a angeordnet werden. Ferner kann der Luftspalt 64a auch bis zum Außenrand des Presshärtewerkzeugs 60a geführt sein, wie der in Fig. 5 gezeigte Einsatz 63.

Alternativ besteht auch die Möglichkeit, den kritischen Abschnitt 55 des Fügeflansches 54 beim Presshärten aus dem Presshärtewerkzeug 60 bzw. 60a hervorstehen zu lassen und somit diesen Abschnitt von dem Presshärtevorgang auszunehmen.

### Bezugszeichenliste

- 10: Teileverbund

- 20: pressgehärtetes Blechbauteil
- 21: Fügeflansch
- 22: weicher Bereich bzw. Bereich mit weichem Gefüge
- 23: weicher Bereich bzw. Bereich mit weichem Gefüge

- 30: zweites Bauteil
- 31: Fügeflansch

- 40: Schweißpunkt

- 50: pressgehärtete B-Säule einer Kraftfahrzeugkarosserie
- 51: Längsprofilabschnitt
- 52: Querprofilabschnitt
- 53: untere Türscharnieranbindung
- 54: Fügeflansch
- 55: kritischer Abschnitt des Fügeflansches
- R: Übergangsradius

- 60, 60a: Presshärtewerkzeug
- 61, 61a: Unterwerkzeug
- 62,62a: Oberwerkzeug
- 63: Einsatz
- 64a: Luftspalt

## Patentansprüche

1. Karosseriestruktur für einen Personenkraftwagen, umfassend eine pressgehärtete B-Säule (50), welche über wenigstens eine Schweißverbindung in diese Karosseriestruktur eingebunden ist,
wobei die pressgehärtete B-Säule (50) einen Fügeflansch (54) aufweist und die Schweißverbindung im Bereich dieses Fügeflanschs (54) angeordnet ist, **dadurch gekennzeichnet, dass**
die pressgehärtete B-Säule (50) im Bereich der Schweißverbindung lokal in einem Abschnitt (55) des Fügeflansches (54) eine geringere Festigkeit und/oder Härte aufweist, als in ihren anderen Bereichen, um eine Rissinitiierung im Bereich dieser Schweißverbindung bei mechanischer Belastung zu vermeiden, wobei sich der Abschnitt (55) des Fügeflansches (54) von einer unteren Türscharnieranbindung (53) bis zum Auslauf der Bauteilkrümmung am Übergang zwischen einem Längsprofilabschnitt (51) und einem Querprofilabschnitt (52) erstreckt und bereits aus dem Presshärtevorgang kommend mit einer geringeren Festigkeit und/oder Härte ausgebildet ist.

2. Karosseriestruktur nach Anspruch 1,
**dadurch gekennzeichnet, dass**
die Schweißverbindung ein Schweißpunkt (40) ist.

3. Karosseriestruktur nach Anspruch 2,
**dadurch gekennzeichnet, dass**
der Bereich mit der geringeren Festigkeit und/oder Härte einem Flächenbereich entspricht, der wenigstens dem 15-fachen, bevorzugt wenigstens dem 10-fachen und insbesondere wenigstens dem 5-fachen der Schweißpunktfläche entspricht, wobei der Schweißpunkt (40) bevorzugt im Wesentlichen im Flächenschwerpunkt dieses Flächenbereichs angeordnet ist.

4. Karosseriestruktur nach Anspruch 1,
**dadurch gekennzeichnet, dass**
die Schweißverbindung eine Schweißnaht ist.

5. Karosseriestruktur nach Anspruch 4,
**dadurch gekennzeichnet, dass**
der Bereich mit der geringeren Festigkeit und/oder Härte einem Flächenbereich entspricht, der sich längs zum Schweißnahtverlauf erstreckt, wobei die Breite dieses Bereichs wenigstens dem 10-fachen, bevorzugt wenigstens dem 5-fachen und insbesondere wenigstens dem 2,5-fachen der Schweißnahtbreite entspricht und wobei die Schweißnaht im wesentlichen mittig dieses Flächenbereichs verläuft.

6. Karosseriestruktur nach einem der vorausgehenden Ansprüche,
**dadurch gekennzeichnet, dass**
die pressgehärtete B-Säule (50) aus einem 22MnB5-Stahl gebildet ist.

## Claims

1. A vehicle body structure for a passenger car, comprising a press-hardened B-pillar (50), which is incorporated in this vehicle body structure by way of at least one welded join,
wherein the press-hardened B-pillar (50) has a joining flange (54) and the welded join is arranged in the region of this joining flange (54), **characterised in that**
the press-hardened B-pillar (50) in the region of the welded join locally in a portion (55) of the joining flange (54) has a lower strength and/or hardness than in its other regions, in order to avoid initiation of cracking in the region of this welded join upon mechanical loading, the portion (55) of the joining flange (54) extending from a lower door hinge attachment (53) to the runout of the component curvature at the transition between a longitudinal profile portion (51) and a transverse profile portion (52), and being designed with a lower strength and/or hardness already coming from the press-hardening operation.

2. A vehicle body structure according to Claim 1,
**characterised in that**
the welded join is a welding spot (40).

3. A vehicle body structure according to Claim 2,
**characterised in that**
the region with the lower strength and/or hardness corresponds to a surface area which corresponds to at least 15 times, preferably at least 10 times and in particular at least 5 times the welding spot area, the welding spot (40) being arranged preferably substantially in the area centroid of this surface area.

4. A vehicle body structure according to Claim 1,
**characterised in that**
the welded join is a weld seam.

5. A vehicle body structure according to Claim 4,
**characterised in that**
the region with the lower strength and/or hardness corresponds to a surface area which extends lengthways to the path of the weld seam, the width of this region corresponding to at least 10 times, preferably at least 5 times and in particular at least 2.5 times the weld seam width, and the weld seam running substantially centrally in this surface area.

6. A vehicle body structure according to one of the preceding claims,
**characterised in that**
the press-hardened B-pillar (50) is formed from a 22MnB5 steel.

## Revendications

1. Structure de carrosserie destinée à un véhicule de tourisme comprenant une colonne B trempée sous pression (50) qui est intégrée dans cette structure de carrosserie par l'intermédiaire d'au moins une liaison soudée, la colonne B trempée sous pression (50) comprenant une bride de jonction (54), et la liaison soudée étant située dans la zone de cette bride de jonction (54),
**caractérisée en ce que**
la colonne B trempée sous pression (50) a, dans la zone de la liaison soudée, localement dans un segment (55) de la bride de jonction (54) une résistance et/ou une dureté plus faible(s) que dans ses autres zones pour éviter un amorçage de fissures dans la zone de cette liaison soudée en cas de charge mécanique, le segment (55) de la bride de jonction (54) s'étendant d'une liaison de charnière de porte inférieure (53) jusqu'à la sortie de la courbure de la pièce au niveau de la transition entre un segment de profil longitudinal (51) et un segment de profil transversal (52), et étant déjà formé à l'issue du procédé de trempe sous pression avec une résistance et/ou une dureté plus faible(s).

2. Structure de carrosserie conforme à la revendication 1,
**caractérisée en ce que**
la liaison soudée est un point de soudure (40).

3. Structure de carrosserie conforme à la revendication 2,
**caractérisée en ce que**
la zone ayant une résistance et/ou une dureté plus faible(s) est une zone de surface qui correspond à au moins 15 fois, de préférence à au moins 10 fois et plus particulièrement à au moins 5 fois la surface du point de soudure, le point de soudure (40) étant de préférence situé au centre de gravité de cette zone de surface.

4. Structure de carrosserie conforme à la revendication 1,
**caractérisée en ce que**
la liaison soudée est un cordon de soudure.

5. Structure de carrosserie conforme à la revendication 4,
**caractérisée en ce que**
la zone ayant une résistance et/ou une dureté plus faible(s) correspond à une zone de surface qui s'étend le long du tracé du cordon de soudure, la largeur de cette zone correspondant à au moins 10 fois de préférence à au moins 5 fois et de préférence à au moins 2,5 fois la largeur du cordon de soudure, et le cordon de soudure s'étendant essentiellement au centre de cette zone de surface.

6. Structure de carrosserie conforme à l'une des revendications précédentes,
**caractérisée en ce que**
la colonne B trempée sous pression (50) est réalisée en un acier 22MnB5.
